(19) Europäisches Patentamt
European Patent Office
Office européen des brevets

(11) **EP 4 345 336 A1**

(12) **EUROPÄISCHE PATENTANMELDUNG**

(43) Veröffentlichungstag:
**03.04.2024   Patentblatt 2024/14**

(21) Anmeldenummer: **23193837.4**

(22) Anmeldetag: **29.08.2023**

(51) Internationale Patentklassifikation (IPC):
**F16F 1/44** (2006.01)          **F16F 1/36** (2006.01)
**F16M 7/00** (2006.01)

(52) Gemeinsame Patentklassifikation (CPC):
**F16F 1/445; F16F 1/3605;** F16F 2224/0225;
F16F 2224/025; F16F 2224/0266; F16F 2228/001;
F16F 2228/007; F16F 2230/0005; F16F 2234/06;
F16M 7/00; F16M 2200/08

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **23.09.2022   AT 6322 U**

(71) Anmelder: **Getzner Werkstoffe Holding GmbH
6706 Bürs (AT)**

(72) Erfinder:
• **Wehowsky, Dirk
  6781 Bartholomäberg (AT)**
• **Marte, Thomas
  6840 Götzis (AT)**
• **Domig, Jonathan
  6721 Thüringerberg (AT)**

(74) Vertreter: **Torggler & Hofmann Patentanwälte -
Rankweil
Torggler & Hofmann Patentanwälte
GmbH & Co KG
Hörnlingerstraße 3
Postfach 5
6830 Rankweil (AT)**

(54) **LAGERFUSS**

(57)    Lagerfuß (1) für eine Maschine (2), insbesondere für eine Wärmepumpe, mit einer Montageschiene (3) zur Befestigung der Maschine (2) am Lagerfuß (1) und mit einem Elastomerkörper (4) zur Abstützung der Montageschiene (3) auf einem Untergrund (5), wobei die Montageschiene (3) in sich längserstreckt ist und eine Elastomerauflagefläche (6) aufweist, mit der die Montageschiene (3) auf dem Elastomerkörper (4) aufliegt, wobei der Elastomerkörper (4) eine Höhe (7) im Bereich von 25 mm bis 75 mm, vorzugsweise von 40 mm bis 60 mm, und eine Breite (8) im Bereich von 80 mm bis 200 mm, vorzugsweise von 80 mm bis 150 mm, und eine Länge (9) im Bereich von 200 mm bis 1500 mm, vorzugsweise von 400 mm bis 1200 mm, aufweist, wobei der Elastomerkörper (4) ein geschäumtes Elastomer mit einem dynamischen Elastizitätsmodul im Bereich von 0,15 $N/mm^2$ bis 5,5 $N/mm^2$, vorzugsweise von 0,2 $N/mm^2$ bis 0,75 $N/mm^2$, aufweist oder aus einem solchen geschäumten Elastomer besteht. (Fig. 3)

Fig.3

EP 4 345 336 A1

**Beschreibung**

Die vorliegende Erfindung betrifft einen Lagerfuß für eine Maschine, insbesondere für eine Wärmepumpe, mit einer Montageschiene zur Befestigung der Maschine am Lagerfuß und mit einem Elastomerkörper zur Abstützung der Montageschiene auf einem Untergrund, wobei die Montageschiene in sich längserstreckt ist und eine Elastomerauflagefläche aufweist, mit der die Montageschiene auf dem Elastomerkörper aufliegt.

Solche Lagerfüße für Maschinen und insbesondere für Wärmepumpen sind durch offenkundige Vorbenutzung bekannt. Bei den gattungsgemäßen, offenkundig vorbenutzten Lagerfüßen besteht der Elastomerkörper aus einem Gummigranulat. Die Praxis zeigt, dass die beim Stand der Technik bekannten Lagerfüße zwar für eine ausreichend stabile Lagerung der Maschine, insbesondere der Wärmepumpe, sorgen. Bezüglich der Schwingungsisolierung weisen diese Lagerfüße aber Defizite auf. Das Problem besteht darin, dass über diese Lagerfüße Schwingung bzw. Körperschall weitgehend ungedämpft auf den Untergrund übertragen werden.

Aufgabe der Erfindung ist es daher, gattungsgemäße Lagerfüße dahingehend zu verbessern, dass sie für eine bessere Schwingungsisolierung sorgen.

Dies wird gemäß der Erfindung ausgehend von gattungsgemäßen Lagerfüßen dadurch erreicht, dass der Elastomerkörper eine Höhe im Bereich von 25 mm bis 75 mm, vorzugsweise von 40 mm bis 60 mm, und eine Breite im Bereich von 80 mm bis 200 mm, vorzugsweise von 80 mm bis 150 mm, und eine Länge im Bereich von 200 mm bis 1500 mm, vorzugsweise von 400 mm bis 1200 mm, aufweist, wobei der Elastomerkörper ein geschäumtes Elastomer mit einem dynamischen Elastizitätsmodul im Bereich von 0,15 N/mm$^2$ (Newton pro Quadratmillimeter) bis 5,5 N/mm$^2$, vorzugsweise von 0,2 N/mm$^2$ bis 0,75 N/mm$^2$, aufweist oder aus einem solchen geschäumten Elastomer besteht.

Es hat sich somit im Zuge der Erfindung überraschenderweise gezeigt, dass eine Kombination aus einer speziellen dynamischen Elastizität eines geschäumten Elastomers mit einer bestimmten geometrischen Ausbildung des Elastomerkörpers für eine wesentlich bessere Schwingungsisolierung durch den Lagerfuß sorgt, als dies vom Stand der Technik bekannt ist.

Der dynamische Elastizitätsmodul des geschäumten Elastomers kann dabei nach DIN53513-Ausgabe 1990-07 bestimmt werden. Die Bestimmung des dynamischen Elastizitätsmoduls sollte bei einer relativen Luftfeuchte von 50 % durchgeführt werden, wobei der Probekörper eine Temperatur von 23°C und Abmessungen von 300x300x25mm aufweist. Der in der Norm beschriebene Messvorgang sollte mit einer Prüffrequenz von 10 Hertz und einer Prüfamplitude von 0,22mm/s (Millimeter pro Sekunde) durchgeführt werden. Auf dem Probekörper sollte eine mittlere Pressung in Abhängigkeit seiner Dichte ausgeübt werden, wobei nachfolgende Tabelle zu berücksichtigen ist.

| Dichte | Mittlere Pressung |
|---|---|
| [kg/m$^3$] | [N/mm$^2$] |
| 160 | 0,011 |
| 190 | 0,018 |
| 205 | 0,028 |
| 245 | 0,042 |
| 275 | 0,055 |
| 380 | 0,11 |
| 510 | 0,22 |
| 665 | 0,45 |

Weist der Probenkörper eine Dichte zwischen den in der Tabelle konkret genannten Werten auf, so kann die mittlere Pressung für diese Dichte durch Mittelung zwischen den in der Tabelle angegebenen benachbarten Angaben erfolgen.

Je nach Beschaffenheit des Untergrunds kann der Lagerfuß mit seinem Elastomerkörper direkt auf dem Untergrunde aufliegen. Es ist aber auch möglich, dass erfindungsgemäße Lagerfüße zusätzlich ein Bodenelement aufweisen, welches im fertig montierten Zustand zwischen dem Elastomerkörper und dem Untergrund zu liegen kommt. Das Bodenelement kann seitlich abstehende Montageflansche aufweisen, welche der Fixierung des Bodenelements und damit des Lagerfußes auf dem Untergrund dienen können. Hierzu können zum Beispiel Montagelöcher in den Montageflanschen vorgesehen sein. Durch diese Montagelöcher hindurch kann das Bodenelement und damit der Lagerfuß mittels Schrauben, Nägeln, Nieten oder dergleichen auf dem Untergrund befestigt werden. Natürlich sind auch andere, insbesondere kraft- und/oder formschlüssige, Befestigungsarten des Bodenelements auf dem Untergrund denkbar.

Das Bodenelement kann zusätzlich auch eine Aufnahmewanne zur Aufnahme des Elastomerkörpers aufweisen, in welche der Elastomerkörper eingelegt werden kann.

Der Elastomerkörper kann bei Bedarf am Bodenelement mittels einer Klebeschicht befestigt werden. Genauso gut kann auch vorgesehen sein, dass die Montageschiene mit ihrer Elastomerauflagefläche mittels einer Klebeschicht auf dem Elastomerkörper fixiert wird. Es sind aber auch alternative Befestigungsformen des Elastomerkörpers an der Montageschiene stattdessen oder zusätzlich denkbar. So weist bei einer bevorzugten Variante die Montageschiene zwei seitliche Klemmbacken auf, zwischen denen sich ein Aufnahmeraum befindet, in dem der Elastomerkörper zwischen die Klemmbacken der Montageschiene eingeführt werden kann. Der Elastomerkörper kann dann klemmend an der Montageschiene befestigt sein. Die rein klemmende Befestigung bietet sich insbesondere dann an, wenn der Elastomerkörper auswechselbar an der Montageschiene befestigt werden soll, zum Beispiel damit der Lagerfuß, je nach Gewicht der auflagernden Maschine, mit unterschiedlichen Elastomerkörpern ausgerüstet werden kann.

Um die aufgrund der Maschine auf dem Lagerfuß und damit auf der Montageschiene aufliegende Last möglichst gut und gleichmäßig in den Elastomerkörper eintragen zu können, sehen bevorzugte Ausgestaltungsformen der Erfindung vor, dass eine Breite der Elastomerauflagefläche, mit der die Montageschiene auf dem Elastomerkörper aufliegt, zumindest 1,5 mal, vorzugsweise zumindest 2 mal, so groß ist wie eine Breite einer Maschinenauflagefläche der Montageschiene, auf der die Maschine auf der Montageschiene aufstellbar ist, wobei die Breite der Elastomerauflagefläche und die Breite der Maschinenauflagefläche in Richtung orthogonal zur Längserstreckung der Montageschiene zu messen sind. Hierbei ist es günstig, wenn die Maschinenauflagefläche zentral über der Elastomerauflagefläche angeordnet ist. In diesem Sinne ist es also günstig, wenn die Elastomerauflagefläche, in einer Draufsicht auf den Lagerfuß gesehen, auf zwei einander gegenüberliegenden Seiten der Maschinenauflagefläche gleich weit über die Maschinenauflagefläche übersteht.

Es können verschiedenartige geschäumte Elastomere dazu verwendet werden, Elastomerkörper für erfindungsgemäße Lagerfüße auszubilden. Besonders bevorzugt ist aber vorgesehen, dass das geschäumte Elastomer des Elastomerkörpers ein geschäumtes Polyurethan ist. Im Sinne einer besonders guten Haltbarkeit und Zersetzungsresistenz gegen Umwelteinflüsse handelt es sich bevorzugt bei dem geschäumten Elastomer des Elastomerkörpers um ein geschäumtes Polyetherurethan.

Um einen dynamischen Elastizitätsmodul des geschäumten Elastomers im oben genannten Bereich zu erreichen, kann neben der entsprechenden Materialwahl die Porosität des geschäumten Elastomers entsprechend eingestellt werden. Bevorzugt ist jedenfalls vorgesehen, dass der Elastomerkörper eine Porosität im Bereich von 30% bis 90%, vorzugsweise im Bereich von 70% bis 85%, aufweist. Die Porosität beschreibt dabei das Verhältnis des Porenraumvolumens zum Gesamtvolumen des Elastomerkörpers.

Der mechanische Verlustfaktor tand liegt für das geschäumte Elastomer günstigerweise in einem Bereich kleiner oder gleich 0,3, vorzugsweise kleiner oder gleich 0,25. Der mechanische Verlustfaktor kann dabei mittels derselben Norm und mit denselben Prüfparametern bestimmt werden, wie dies für den dynamischen Elastizitätsmodul oben beschrieben wurde.

Da die Maschinen bzw. insbesondere Wärmepumpen in der Regel über eine Vielzahl von Jahren mit den Lagerfüßen auf dem Untergrund stehen, sollte der Elastomerkörper dauerhaft im Wesentlichen formstabil bleiben, also ein möglichst geringes Kriechen aufweisen.

In diesem Sinne ist es günstig, wenn der Elastomerkörper einen Kriechindex nach 100 Tagen von höchstens 2,0, vorzugsweise von höchstens 1,0, aufweist. Liegt der Kriechindex in diesen Bereichen, so ist auch die notwendige Formstabilität des Elastomerkörpers und damit des Lagerfußes über mehrere Dekaden, also über mehrere Jahrzehnte, gewährleistet.

Der Kriechindex kann dabei, außer bezüglich der Abmessungen des Probekörpers, gemäß DIN8013-Ausgabe 1993-07 bestimmt werden, wobei der Probekörper während der Prüfung eine Temperatur von 23°C aufweisen sollte und während der Prüfung in einer mit 23°C temperierten Prüfkammer bei einer relativen Luftfeuchtigkeit von 50 % gelagert werden sollte. Der Probekörper sollte, abweichend von den Angaben in DIN8013-Ausgabe 1993-07, Abmessungen von 300x300x25mm aufweisen. Die Prüfdauer beträgt 100 Tage. Die bei der Prüfung einzusetzende mittlere Pressung ist wiederum von der Dichte des Probekörpers abhängig, wobei auf die oben zur Bestimmung des dynamischen Elastizitätsmoduls wiedergegebene Tabelle zur Bestimmung der mittleren Pressung in Abhängigkeit der Dichte verwiesen werden kann.

Die Dichte des Elastomerkörpers erfindungsgemäßer Lagerfüße liegt günstigerweise im Bereich von 100 kg/m$^3$ bis 700 kg/m$^3$.

Die Montageschiene besteht günstiger Weise aus einem entsprechend geeigneten Metall, insbesondere aus Aluminium oder einer Aluminiumlegierung. In bevorzugten Ausgestaltungsformen ist die Montageschiene ein Stranggussprofil. Sie kann aber auch aus entsprechend harten Kunststoffen oder Verbundwerkstoffen bestehen.

Neben dem Lagerfuß an sich betrifft die Erfindung auch eine Anordnung mit einer Maschine, vorzugsweise einer Wärmepumpe, und zumindest zwei erfindungsgemäßen Lagerfüßen, wobei die Maschine auf den Montageschienen in der Lagerfüße aufliegt und die Lagerfüße unter Zwischenlage der Elastomerkörper auf einen Untergrund abgestellt sind. Im Sinne einer besonders guten Schwingungsisolierung ist dabei vorgesehen, dass die Anordnung, also in anderen Worten das Gesamtsystem aus Maschine und Lagerfüßen, eine Eigenfrequenz im Bereich von 10 Hertz bis 20 Hertz, vorzugsweise von 10 Hertz bis 15 Hertz, aufweist. Die Eigenfrequenz $f_0$ der Anordnung bzw. des Gesamtsystems berechnet sich dabei nach der Formel:

$$f_0 = \frac{1}{2\pi} \cdot \sqrt{\frac{c}{m}}$$

, wobei m die Masse des Gesamtsystems bzw. der Anordnung und c die dynamische Steifigkeit der bei den Lagerfüßen eingesetzten Elastomerkörper ist. Die dynamische Steifigkeit kann dabei in bekannter Art und Weise aus dem dynamischen Elastizitätsmodul berechnet werden.

Die erfindungsgemäß vorgesehenen Eigenfrequenzbereiche der erfindungsgemäßen Anordnungen liegen so weit außerhalb der Frequenzen der üblicherweise von Maschinen und insbesondere von Wärmepumpen abgegebenen mechanischen Schwingungen und Vibrationen, dass hierdurch eine besonders gute Schwingungsisolierung und damit eine Minimierung der Übertragung des Körperschalls erreicht wird.

Weitere Merkmale und Einzelheiten bevorzugter Ausgestaltungsformen der Erfindung werden nachfolgend in der Figurenbeschreibung beispielhaft erläutert. Es zeigen:

Fig. 1 bis 4: Darstellungen zu einem ersten erfindungsgemäßen Ausführungsbeispiel eines Lagerfußes;

Fig. 5: eine alternative Ausgestaltungsform eines erfindungsgemäßen Lagerfußes in einer Schnittdarstellung analog zu Fig. 3;

Fig. 6: eine schematisierte Draufsicht auf eine erfindungsgemäße Anordnung mit einer Maschine und zumindest zwei Lagerfüßen und

Fig. 7: den schematisiert dargestellten Vertikalschnitt entlang der Schnittlinie CC aus Fig. 6.

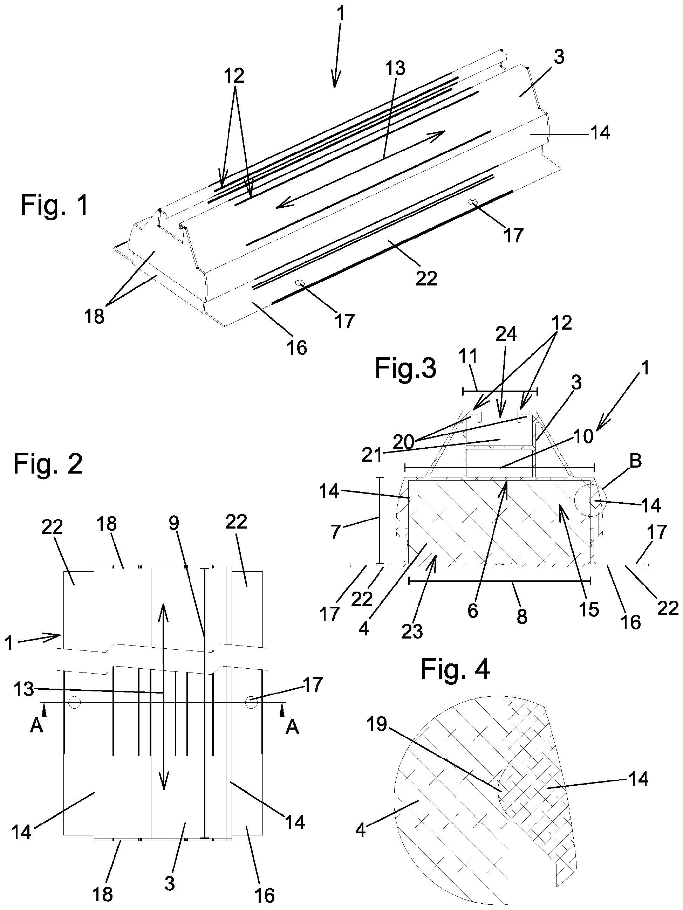

Fig. 1 zeigt eine perspektivische Darstellung eines Ausführungsbeispiels eines Lagerfußes 1. Ist eine entsprechende Anzahl dieser Lagerfüße 1 entsprechend positioniert auf dem Untergrund 5 abgestellt, so kann eine Maschine 2, wie z. B. eine Wärmepumpe, auf den Montageschienen 3 und hier konkret auf den Maschinenauflagefläche 12 der Lagerfüße 1 abgestellt und gegebenenfalls daran zusätzlich befestigt werden. Der in Fig. 1 dargestellte Lagerfuß 1 und seine Montageschiene 3 sind in der Richtung der Längserstreckung 13 längserstreckt. In Fig. 1 ist der Elastomerkörper 4 des Lagerfußes 1 nicht zu sehen. Er befindet sich in einem entsprechenden Aufnahmeraum 15 der Montageschiene 1 zwischen den Klemmbacken 14 und in einer entsprechenden Aufnahmewanne 23 des bei diesem Ausführungsbeispiel vorgesehenen Bodenelements 16. Stirnseitig sind in diesem Ausführungsbeispiel die Öffnungen in der Montageschiene 3 und im Bodenelement 16 mittels Stirnblenden 18 abgedeckt. Diese Stirnblenden 18 sind aber optional und günstigerweise auch abnehmbar.

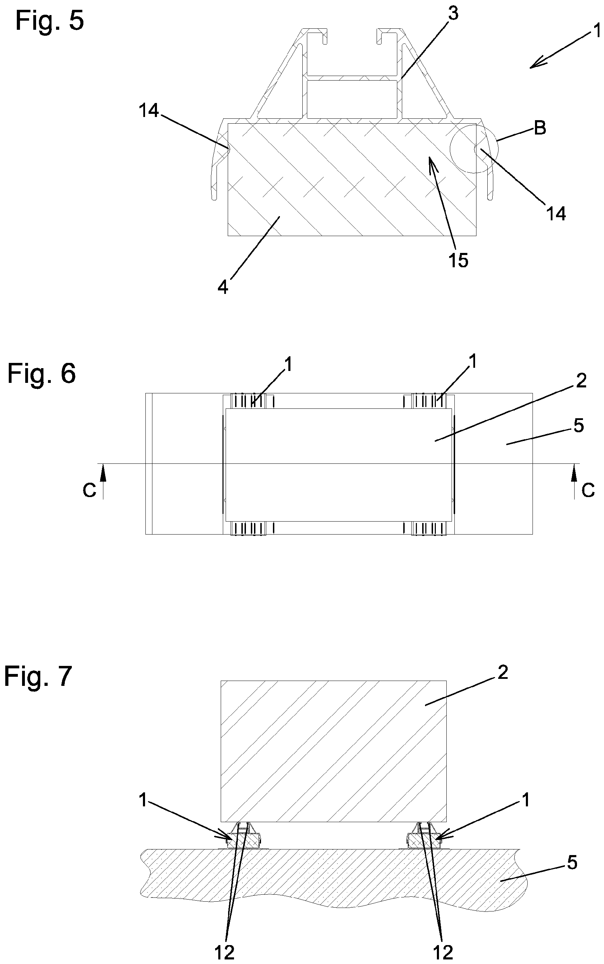

In Fig. 1 sind auch die Montageflansche 22 des Bodenelements 16 zu sehen, in denen sich in diesem Ausführungsbeispiel Montagelöcher 17 befinden. Mittels entsprechender Schrauben, Nieten, Nägel oder dergleichen können die Montagelöcher 17 und die Montageflansche 22 dazu verwendet werden, den Lagerfuß 1 auf einem Untergrund 5 zu befestigen. Dies muss aber nicht zwingend so sein, wie anhand von Fig. 5 und damit einem zweiten Ausführungsbeispiel der Erfindung weiter unten noch erläutert wird.

Fig. 2 zeigt eine Draufsicht auf den Lagerfuß 1 aus Fig. 1. Eingezeichnet ist in Fig. 2 neben den bereits erläuterten Bauteilen und der Längserstreckung 13 auch die Länge 9 des in Fig. 2 nach wie vor nicht sichtbaren Elastomerkörpers 4.

Fig. 3 zeigt einen Vertikalschnitt durch den Lagerfuß 1 gemäß der Fig. 1 und 2 entlang der in Fig. 2 eingezeichneten Schnittlinie AA.

Hier ist gut zu erkennen, dass die Montageschiene 3 in diesem Ausführungsbeispiel als ein Stranggussprofil ausgebildet ist. Sie weist eine Maschinenauflagefläche 12 auf, die dazu vorgesehen ist, eine Maschine 2 bzw. insbesondere eine Wärmepumpe auf dem Lagerfuß 1 zu lagern. Diese Maschinenauflagefläche 12 ist in bevorzugten Ausgestaltungsformen, wie den hier gezeigten, aus 2 Schultern 20 ausgebildet, zwischen denen eine durchgehende Öffnung 24 in eine Nut 21 der Montageschiene 3 führt. Zur Befestigung der Maschine 2 bzw. der der Wärmepumpe auf dem Lagerfuß 1 können so z. B. Schraubenköpfe, Klemmen, Keile oder dgl. durch die Öffnung 24 in die Nut 21 eingeführt werden, um dann die Schultern 20 hintergreifend der Befestigung der Maschine 2 an der Montageschiene 3 zu dienen. Bei der Bestimmung der Breite 11, der Maschinenauflagefläche 12, der Montageschiene 3, wird dabei, wie in Fig. 3 gezeigt, die gesamte Breite 11, bestehend aus den Schultern 20 und der dazwischenliegenden Öffnung 24, herangezogen.

Die Montageschiene 3 liegt mit der Elastomerauflagefläche 6 auf dem Elastomerkörper 4 auf. Im Sinne einer guten Abstützung ist, wie eingangs bereits erläutert, vorgesehen, dass die Breite 10 der Elastomerauflagefläche 6 bevorzugt zumindest 1,5, vorzugsweise 2, mal so groß ist wie die Breite 11 der Maschinenauflagefläche 12. Günstigerweise ist die Maschinenauflagefläche 12 in einer Draufsicht, wie in Fig. 2, zentral über der Elastomerauflagefläche 6 angeordnet. In anderen Worten steht günstigerweise, in dieser Draufsicht gesehen, die Elastomerauflagefläche 6 auf beiden Seiten gleich weit über die Maschinenauflagefläche 12 über.

Zur Befestigung des Elastomerkörpers 4 kann dieser mittels einer Klebeschicht an der Elastomerauflagefläche 6 der Montageschiene 3 befestigt sein. Es kann aber auch eine rein klemmende Befestigung des Elastomerkörpers 4 an der Montageschiene 3 realisiert werden. Dies ist insbesondere dann günstig, wenn der Lagerfuß 1 mit verschiedenen Elastomerkörpern 4 ausrüstbar sein soll. In diesem Fall können die Elastomerkörper 4 aufgrund ihrer klemmenden Befestigung an der Montageschiene 3 abgenommen und durch einen anderen Elastomerkörper 4 ersetzt werden.

Zur klemmenden Befestigung des Elastomerkörpers 4 in bzw. an der Montageschiene 3 kann, wie in diesem Ausführungsbeispiel auch realisiert, die Montageschiene 3 zwei seitliche Klemmbacken 14 aufweisen, zwischen denen sich ein Aufnahmeraum 15 für den Elastomerkörper 4 befindet. Der Elastomerkörper 4 kann so in den Aufnahmeraum 5 eingeschoben und dort klemmend zwischen den Klemmbacken 14 gehalten werden.

Fig. 4 zeigt den Ausschnitt B aus Fig. 3 vergrößert. Hier ist zu sehen, wie einer der Klemmbacken 14 mit einem, vorzugsweise leistenförmig oder in einer Abfolge punktförmig ausgebildeten, Vorsprung 19 in den Elastomerkörper 4 hineindrückt, um diesen so klemmend an der Montageschiene 3 zu befestigen. Auf der anderen Seite ist diese klemmende Befestigung am gegenüberliegenden Klemmbacken 14 günstigerweise genauso ausgeführt.

Der Elastomerkörper 4 kann, aber muss nicht, als Quader ausgeführt sein. Seine, in Fig. 3 eingezeichnete, Höhe 7 und Breite 8 sowie seine, in Fig. 2 eingezeichnete, Länge 9 liegen jedenfalls bei erfindungsgemäßen Lagerfüßen 1 in dem im Patentanspruch 1 festgelegten Bereichen. Darüber hinaus ist erfindungsgemäß vorgesehen, dass der Elastomerkörper 4 ein geschäumtes Elastomer mit einem dynamischen Elastizitätsmodul im Bereich von 0,15 N/mm$^2$ bis 5,5 N/mm$^2$, vorzugsweise 0,2 N/mm$^2$ bis 0,75 N/mm$^2$, aufweist, oder vollständig aus einem solchen geschäumten Elastomer besteht. Dies wurde eingangs bereits erläutert.

In Fig. 3 ist gut zu sehen, dass in diesem Ausführungsbeispiel der Lagerfuß 1 nicht direkt mit seinem Elastomerkörper 4 auf dem Untergrund 5 aufliegt. Es ist bei diesem Ausführungsbeispiel des Lagerfußes 1 ein Bodenelement 16 vorgesehen, welches der Auflage auf dem Untergrund 5 dient. Fig. 3 ist gut zu entnehmen, dass dieses Bodenelement 16 die bereits genannten Montageflansche 22 mit den Montagelöchern 17 aufweist. Zusätzlich umfasst das Bodenelement 16 auch eine Aufnahmewanne 23, in welche der Elastomerkörper 4 eingelegt wird. Die Seitenwände der Aufnahmewanne 23 sowie die Klemmbacken 14 der Montageschiene 3 können so weit nach oben bzw. nach unten reichen, dass sie sich, wie in Fig. 3 beispielhaft gezeigt, überlappen. Zusammen mit den Stirnblenden 18 kann so sichergestellt werden, dass der Elastomerkörper 4 nach außen hin vollständig bzw. zumindest im Wesentlichen gegen Umwelteinflüsse abgeschirmt ist, was seiner dauerhaften Langlebigkeit zu Gute kommt. Der Vollständigkeit halber wird darauf hingewiesen, dass der Elastomerkörper 4 auch mittels einer Klebeschicht am Bodenelement 16 bzw. an der Aufnahmewanne 23 befestigt werden kann. Zur Materialwahl beim geschäumten Elastomer des Elastomerkörpers 4 wie auch bei der Montageschiene 3 wird im Wesentlichen auf das eingangs Gesagte verwiesen. Zu den bevorzugten physikalischen Eigenschaften des geschäumten Elastomers wird ebenfalls auf das eingangs Gesagte verwiesen.

Fig. 5 zeigt in einem Schnitt analog zu Fig. 3 ein zweites Ausführungsbeispiel der Erfindung. Dieses ähnelt im Wesentlichen dem ersten Ausführungsbeispiel. Der einzige Unterschied besteht darin, dass bei der Variante gem. Fig. 5 das Bodenelement 16 weggelassen ist. Hierdurch ist also vorgesehen, dass im zweiten Ausführungsbeispiel der Lagerfuß 1 direkt mit dem Elastomerkörper 4 auf dem Untergrund 5 aufliegt. Ansonsten gelten die Ausführungen zum ersten Ausführungsbeispiel auch für dieses zweite Ausführungsbeispiel.

Die Fig. 6 und 7 zeigen nun noch eine erfindungsgemäße Anordnung, bei der eine Maschine 2, insbesondere eine Wärmepumpe, mit zwei Lagerfüßen 1 auf dem Untergrund 5 lagert. Es ist dabei vorgesehen, dass die Maschine 2 auf den Montageschienen 3 der Lagerfüße 1 aufliegt und die Lagerfüße 1 unter Zwischenschaltung der Elastomerkörper 4 auf dem Untergrund 5 abgestellt sind. Fig. 6 zeigt eine Draufsicht auf eine solche Anordnung, Fig. 7 den Vertikalschnitt entlang der Schnittlinie CC aus Fig. 6. Die Elastomerkörper 4 können gemäß dem ersten Ausführungsbeispiel unter Zwischenlage von entsprechenden Bodenelementen 16 auf dem Untergrund 5 auflagern. In Anwendung des zweiten Ausführungsbeispiels gem. Fig. 5 können die Elastomerkörper 4 aber auch direkt auf dem Untergrund 5 liegen. Bei dem zweiten Ausführungsbeispiel wird ja, wie oben ausgeführt, auf das Bodenelement 16 verzichtet.

Durch die erfindungsgemäße Ausbildung der Lagerfüße 1 kann dann bei einer solchen Anordnung gem. der Fig. 6 und 7 eine Eigenfrequenz im Bereich von 10 Hz bis 20 Hz, vorzugsweise 10 Hz bis 15 Hz, erreicht werden, wodurch eine besonders gute Schwingungsisolierung und damit auch Vermeidung der Übertragung von Körperschall erreicht wird.

Legende

zu den Hinweisziffern:

| | |
|---|---|
| 1 | Lagerfuß |
| 2 | Maschine |
| 3 | Montageschiene |
| 4 | Elastomerkörper |
| 5 | Untergrund |
| 6 | Elastomerauflagefläche |
| 7 | Höhe |
| 8 | Breite |
| 9 | Länge |
| 10 | Breite |
| 11 | Breite |
| 12 | Maschinenauflagefläche |
| 13 | Längserstreckung |
| 14 | Klemmbacken |
| 15 | Aufnahmeraum |
| 16 | Bodenelement |
| 17 | Montageloch |
| 18 | Stirnblende |
| 19 | Vorsprung |
| 20 | Schulter |
| 21 | Nut |
| 22 | Montageflansche |
| 23 | Aufnahmewanne |
| 24 | Öffnung |

**Patentansprüche**

1. Lagerfuß (1) für eine Maschine (2), insbesondere für eine Wärmepumpe, mit einer Montageschiene (3) zur Befestigung der Maschine (2) am Lagerfuß (1) und mit einem Elastomerkörper (4) zur Abstützung der Montageschiene (3) auf einem Untergrund (5), wobei die Montageschiene (3) in sich längserstreckt ist und eine Elastomerauflagefläche (6) aufweist, mit der die Montageschiene (3) auf dem Elastomerkörper (4) aufliegt, **dadurch gekennzeichnet, dass** der Elastomerkörper (4) eine Höhe (7) im Bereich von 25 mm bis 75 mm, vorzugsweise von 40 mm bis 60 mm, und eine Breite (8) im Bereich von 80 mm bis 200 mm, vorzugsweise von 80 mm bis 150 mm, und eine Länge (9) im Bereich von 200 mm bis 1500 mm, vorzugsweise von 400 mm bis 1200 mm, aufweist, wobei der Elastomerkörper (4) ein geschäumtes Elastomer mit einem dynamischen Elastizitätsmodul im Bereich von 0,15 N/mm$^2$ bis 5,5 N/mm$^2$, vorzugsweise von 0,2 N/mm$^2$ bis 0,75 N/mm$^2$, aufweist oder aus einem solchen geschäumten Elastomer besteht.

2. Lagerfuß (1) nach Anspruch 1, **dadurch gekennzeichnet, dass** das geschäumte Elastomer ein geschäumtes Polyurethan, vorzugsweise ein geschäumtes Polyetherurethan, ist.

3. Lagerfuß (1) nach Anspruch 1 oder 2, **dadurch gekennzeichnet, dass** das geschäumte Elastomer einen mechanischen Verlustfaktor von höchstens 0,3, vorzugsweise von höchstens 0,25, aufweist.

4. Lagerfuß (1) nach einem der Ansprüche 1 bis 3, **dadurch gekennzeichnet, dass** der Elastomerkörper (4) einen Kriechindex nach 100 Tagen von höchstens 2,0, vorzugsweise von höchstens 1,0, aufweist.

5. Lagerfuß (1) nach einem der Ansprüche 1 bis 4, **dadurch gekennzeichnet, dass** der Elastomerkörper (4) eine Dichte im Bereich von 100 kg/m$^3$ bis 700 kg/m$^3$ aufweist.

6. Lagerfuß (1) nach einem der Ansprüche 1 bis 5, **dadurch gekennzeichnet, dass** der Elastomerkörper (4) eine Porosität im Bereich von 30% bis 90%, vorzugsweise im Bereich von 70% bis 85%, aufweist.

7. Lagerfuß (1) nach einem der Ansprüche 1 bis 7, **dadurch gekennzeichnet, dass** eine Breite (10) der Elastomerauflagefläche (6), mit der die Montageschiene (3) auf dem Elastomerkörper (4) aufliegt, zumindest 1,5 mal, vorzugsweise zumindest 2 mal, so groß ist wie eine Breite (11) einer Maschinenauflagefläche (12) der Montageschiene (3), auf der die Maschine (2) auf der Montageschiene (3) aufstellbar ist, wobei die Breite (10) der Elastomerauflagefläche (6) und die Breite (11) der Maschinenauflagefläche (12) in Richtung orthogonal zur Längserstreckung (13) der Montageschiene (3) zu messen sind.

8. Lagerfuß (1) nach Anspruch 7, **dadurch gekennzeichnet, dass** die Elastomerauflagefläche (6), in einer Draufsicht auf den Lagerfuß (1) gesehen, auf zwei einander gegenüberliegenden Seiten der Maschinenauflagefläche (12) gleich weit über die Maschinenauflagefläche (12) übersteht.

9. Lagerfuß (1) nach einem der Ansprüche 1 bis 8, **dadurch gekennzeichnet, dass** die Montageschiene (3) ein Stranggussprofil ist, und/oder dass die Montageschiene (3) zwei Klemmbacken (14) aufweist, welche einen Aufnahmeraum (15) für den Elastomerkörper (4) begrenzen, wobei der Elastomerkörper (4) zwischen den Klemmbacken (14) im Aufnahmeraum (15), vorzugsweise auswechselbar, klemmend befestigt ist.

10. Anordnung mit einer Maschine (2), vorzugsweise einer Wärmepumpe, und zumindest zwei Lagerfüßen (1) nach einem der Ansprüche 1 bis 9, **dadurch gekennzeichnet, dass** die Maschine (2) auf den Montageschienen (3) der Lagerfüße (1) aufliegt und die Lagerfüße (1) unter Zwischenlage der Elastomerkörper (4) auf einem Untergrund (5) abgestellt sind, wobei die Anordnung eine Eigenfrequenz im Bereich von 10 Hertz bis 20 Hertz, vorzugsweise von 10 Hertz bis 15 Hertz, aufweist.

Fig. 1

Fig. 2

Fig.3

Fig. 4

Fig. 5

Fig. 6

Fig. 7

Europäisches Patentamt
European Patent Office
Office européen des brevets

# EUROPÄISCHER RECHERCHENBERICHT

Nummer der Anmeldung

**EP 23 19 3837**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 033 974 A (ANGUS GEORGE CO LTD) 22. Juni 1966 (1966-06-22) * Abbildungen 1-3 * * Seite 1, Zeile 9 – Zeile 24 * * Seite 1, Zeile 64 – Zeile 90 * ----- | 1-10 | INV. F16F1/44 F16F1/36 ADD. F16M7/00 |
| A | Getzner Werkstoffe Gmbh: "Polyurethane Materials for Vibration Isolation", , 1. Mai 2017 (2017-05-01), XP093130367, Gefunden im Internet: URL:https://www.rosta.com/ro-wAssets/docs/getzner_brochure_polyurethane_EN.pdf [gefunden am 2024-02-12] * das ganze Dokument * ----- | 1-6 | |
| A | KINGSBURY HERBERT B ET AL: "Dynamic Complex Modulus of Polyurethane Foams", JOURNAL OF CELLULAR PLASTICS, SAGE PUBLICATIONS, LONDON, GB , Bd. 14, Nr. 2 1. März 1978 (1978-03-01), Seiten 113-117, XP009552014, ISSN: 0021-955X, DOI: 10.1177/0021955X7801400209 Gefunden im Internet: URL:http://journals.sagepub.com/doi/pdf/10.1177/0021955X7801400209 [gefunden am 2024-02-12] * das ganze Dokument * ----- | 1-3 | **RECHERCHIERTE SACHGEBIETE (IPC)** F16F F16M F24F F24H C08G |
| A | EP 1 191 048 A1 (ATOFINA [FR]) 27. März 2002 (2002-03-27) * Zusammenfassung; Abbildungen 1-4 * * Absatz [0001] – Absatz [0010] * ----- -/-- | 1,2,5 | |

Der vorliegende Recherchenbericht wurde für alle Patentansprüche erstellt

| Recherchenort | Abschlußdatum der Recherche | Prüfer |
|---|---|---|
| Den Haag | 14. Februar 2024 | Maroño Martínez, J |

**EUROPÄISCHER RECHERCHENBERICHT**

Nummer der Anmeldung

EP 23 19 3837

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | KR 2013 0081519 A (WINIAMANDO INC [KR]) 17. Juli 2013 (2013-07-17) * Abbildungen 1-4 * | 7-10 | |
| A | EP 3 017 738 A1 (VORWERK CO INTERHOLDING [DE]) 11. Mai 2016 (2016-05-11) * Zusammenfassung; Abbildungen 1-13 * * Absatz [0025] * * Absatz [0041] – Absatz [0043] * | 1-3 | |
| A | EP 1 022 297 A1 (BASF AG [DE]) 26. Juli 2000 (2000-07-26) * Absatz [0008] * * Absatz [0039] – Absatz [0040] * | 1-3 | |
| A | EP 2 022 902 A2 (GETZNER WERKSTOFFE HOLDING GMBH [AT]) 11. Februar 2009 (2009-02-11) * Zusammenfassung; Abbildungen 1-3 * * Absatz [0006] * * Absatz [0013] * | 1-3 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 14. Februar 2024 | Maroño Martínez, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 23 19 3837**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**14-02-2024**

| Im Recherchenbericht angeführtes Patentdokument | Datum der Veröffentlichung | Mitglied(er) der Patentfamilie | | Datum der Veröffentlichung |
|---|---|---|---|---|
| GB 1033974 A | 22-06-1966 | KEINE | | |
| EP 1191048 A1 | 27-03-2002 | EP | 1191048 A1 | 27-03-2002 |
| | | FR | 2814210 A1 | 22-03-2002 |
| KR 20130081519 A | 17-07-2013 | KEINE | | |
| EP 3017738 A1 | 11-05-2016 | CN | 105587975 A | 18-05-2016 |
| | | EP | 3017738 A1 | 11-05-2016 |
| | | PL | 3017738 T3 | 29-03-2019 |
| | | PT | 3017738 T | 28-01-2019 |
| | | US | 2016131300 A1 | 12-05-2016 |
| EP 1022297 A1 | 26-07-2000 | DE | 19902802 A1 | 03-08-2000 |
| | | EP | 1022297 A1 | 26-07-2000 |
| EP 2022902 A2 | 11-02-2009 | AT | 504913 A4 | 15-09-2008 |
| | | CA | 2638507 A1 | 08-02-2009 |
| | | EP | 2022902 A2 | 11-02-2009 |
| | | JP | 2009041774 A | 26-02-2009 |
| | | US | 2009038882 A1 | 12-02-2009 |

EPO FORM P0461

Für nähere Einzelheiten zu diesem Anhang : siehe Amtsblatt des Europäischen Patentamts, Nr.12/82